# FASCICULE DE BREVET EUROPEEN

(11) **EP 3 645 934 B1**
(45) Date de publication et mention de la délivrance du brevet: **31.03.2021**
(21) Numéro de dépôt: 18737694.2
(22) Date de dépôt: 20.06.2018
(51) Int. Cl.: F17C 5/00, F17C 5/06

(54) **STATION ET PROCÉDÉ DE REMPLISSAGE DE RÉSERVOIRS DE GAZ SOUS PRESSION**
STATION UND VERFAHREN ZUR BEFÜLLUNG VON UNTER DRUCK STEHENDEN GASTANKS
STATION AND METHOD FOR FILLING PRESSURISED GAS TANKS

(30) Priorité: 27.06.2017 FR 1755891
(43) Date de publication de la demande: 06.05.2020
(73) Titulaire: L'AIR LIQUIDE, Société Anonyme pour l'Etude et l'Exploitation des Procédés Georges Claude, 75007 Paris (FR)
(72) Inventeur: CHOLLAT, Jean-Jacques, 38360 Sassenage (FR); FRANCOIS, Thibaut, 38120 Fontanil Cornillon (FR); JANNIN, Nicolas, 38120 Saint Egreves (FR); OTT, Thierry, 91800 Brunoy (FR)
(74) Mandataire: Air Liquide
(86) Numéro de dépôt international: PCT/FR2018/051477
(87) Numéro de publication internationale: WO 2019/002724

(56) Documents cités:
- WO-A1-2016/146912
- DE-A1-102014 015 987
- FR-A1- 2 960 041

## Description

L'invention concerne une station et un procédé de remplissage de réservoir(s).

L'invention concerne plus particulièrement une station de remplissage de réservoirs de gaz sous pression, notamment de réservoirs d'hydrogène de véhicules, comprenant un circuit de remplissage ayant une extrémité amont reliée à au moins une source de gaz et une extrémité aval destinée à être raccordée à au moins un réservoir à remplir, le circuit de remplissage comprenant un organe de compression du gaz provenant de la source, la station de remplissage comprenant un dispositif de refroidissement du gaz comprimé comportant un échangeur de chaleur situé dans circuit de remplissage configuré pour assurer un échange thermique entre le gaz sous pression et un fluide de refroidissement, le dispositif de refroidissement comprenant un réserve de liquide cryogénique constituant le fluide de refroidissement et un circuit de refroidissement reliant la réserve de liquide cryogénique à l'échangeur de chaleur pour transférer des frigories du liquide cryogénique vers le gaz sous pression.

Il est connu de réaliser une opération de refroidissement lors du remplissage rapide de réservoirs d'hydrogène gazeux sous pression.

Ceci nécessite généralement un groupe de refroidissement ayant un coût élevé. L'implantation d'une station de remplissage en milieu urbain proche des habitations nécessite par ailleurs de réduire les émissions sonore de la station.

Des solutions connues utilisent un système de refroidissement à l'azote liquide. D'autres solutions utilisent un groupe de refroidissement autonome car la gestion de l'azote liquide et de l'échangeur de chaleur correspondant pouvait insuffisamment optimisée Le document WO 2016/146912 divulgue une station de remplissage de réservoirs de gaz sous pression selon l'art antérieur.

Un but de la présente invention est de pallier tout ou partie des inconvénients de l'art antérieur relevés ci-dessus.

A cette fin, la station selon l'invention, par ailleurs conforme à la définition générique qu'en donne le préambule ci-dessus, est essentiellement caractérisée en ce que le circuit de refroidissement comprend en outre une ligne de prélèvement de gaz reliant un volume contenant le gaz vaporisé de la réserve à l'échangeur de chaleur, pour transférer des frigories du fluide de refroidissement cryogénique vaporisé à l'échangeur de chaleur.

Par ailleurs, des modes de réalisation de l'invention peuvent comporter l'une ou plusieurs des caractéristiques suivantes :
- la ligne de prélèvement comprend une vanne, notamment une vanne pilotée,
- la ligne de prélèvement possède une extrémité raccordée au circuit de refroidissement,
- le circuit de refroidissement comprend, en aval de l'échangeur de chaleur, une portion reliant une sortie de l'échangeur de chaleur à l'organe de compression, pour transférer des frigories du fluide cryogénique à l'organe de compression et notamment par échange thermique du fluide de refroidissement avec une ou des chambres de compression de l'organe de compression,
- le circuit de refroidissement comprend, en aval de la sortie de l'échangeur de chaleur, une double paroi assurant un échange de chaleur avec le circuit de remplissage en amont et/ou en aval de l'échangeur,
- le circuit de refroidissement comprend, en aval de l'organe de compression, une portion reliant une sortie de l'organe de compression à un réservoir de récupération de fluide cryogénique vaporisé,
- fluide cryogénique de refroidissement comprend de l'azote.

L'invention concerne également un procédé de remplissage d'un gaz sous pression dans un réservoir, notamment de l'hydrogène dans le réservoir d'un véhicule, au moyen d'une station de remplissage comprenant un circuit de remplissage muni d'une extrémité amont reliée à au moins une source de gaz et une extrémité aval destinée à être raccordée à au moins un réservoir à remplir, le circuit de remplissage comprenant un organe de compression du gaz provenant de la source, la station de remplissage comprenant un dispositif de refroidissement du gaz comprimé comportant un échangeur de chaleur situé dans circuit de remplissage configuré pour permettre un échange thermique entre le gaz sous pression et un fluide cryogénique de refroidissement liquéfié d'une réserve de fluide cryogénique liquéfié, le procédé comprenant une étape de transfert de frigories entre du fluide cryogénique vaporisé dans la réserve et l'échangeur de chaleur.

Selon d'autres particularités :
- l'étape de transfert de frigories entre le fluide cryogénique vaporisé dans la réserve et l'échangeur de chaleur est réalisée à un moment distinct de l'échange thermique entre le gaz sous pression et le fluide cryogénique de refroidissement liquéfié,
- l'étape de transfert de frigories entre du fluide cryogénique vaporisé dans la réserve et l'échangeur de chaleur est réalisée entre deux étapes de transfert de fluide de la source de gaz vers le réservoir à remplir, c'est-à-dire pour maintenir en froid l'échangeur de chaleur avant un remplissage ou entre deux remplissages,
- l'échangeur de chaleur est maintenu à une température comprise entre - 30°C et -50°C par l'étape de transfert de frigories entre du fluide cryogénique vaporisé et l'échangeur de chaleur,
- le procédé comporte une étape de transfert de frigories entre du fluide cryogénique vaporisé dans la réserve et l'un au moins des éléments suivants de la station: une armoire électrique, une centrale hydraulique, une conduite de transfert de fluide.

L'invention peut concerner également tout dispositif ou procédé alternatif comprenant toute combinaison des caractéristiques ci-dessus ou ci-dessous, dans le cadre des revendications.

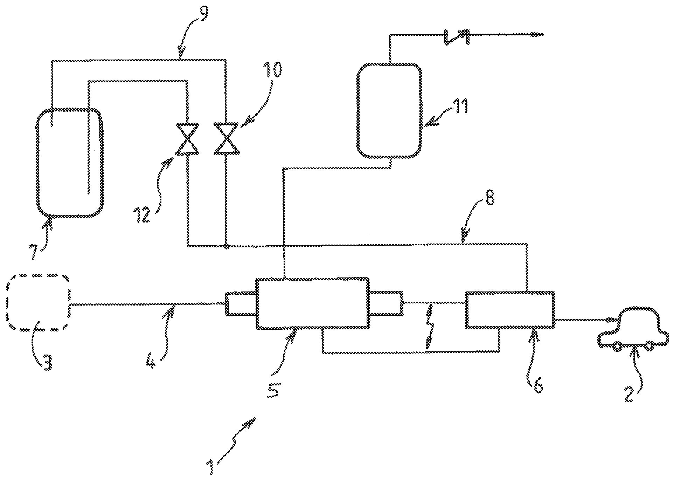

D'autres particularités et avantages apparaîtront à la lecture de la description ci-après, faite en référence à la figure unique qui représente un exemple possible de structure et de fonctionnement de l'invention.

La station 1 de remplissage représentée à la figure comprend classiquement un circuit 4 de remplissage ayant une extrémité amont reliée à au moins une source 3 de gaz et au moins une extrémité aval destinée à être raccordée à au moins un réservoir 2 à remplir. Les termes « amont » et « aval » font référence au sens d'écoulement du fluide.

La source 3 de gaz sous peut comprendre l'un au moins : un ou plusieurs stockage de gaz sous pression (notamment des stockages raccordés en parallèle pour permettre des phases d'équilibrage de pression en cascade), une source de gaz liquéfié, un vaporiseur, un électrolyseur, ...

Le circuit 4 de remplissage comprend un organe 5 de compression du gaz provenant de la source 3, par exemple au moins un compresseur.

En aval du compresseur 5, la station 1 comprend également un dispositif de refroidissement du gaz comprimé comportant un échangeur de chaleur 6 situé dans le circuit 4 de remplissage.

Classiquement l'échangeur 6 est configuré pour assurer un échange thermique indirect entre le gaz sous pression et un fluide de refroidissement notamment de l'azote liquide entre -196°C et -200°C. A cet effet, le dispositif de refroidissement comprend une réserve 7 de fluide cryogénique (azote liquide ou autre le cas échéant) et un circuit 8 de refroidissement reliant la réserve 7 de fluide cryogénique à l'échangeur 6 de chaleur pour transférer des frigories du fluide cryogénique vers le gaz sous pression. C'est-à-dire que le circuit de refroidissement comprend une ligne de prélèvement de liquide dans la réserve 7 qui est acheminé dans l'échangeur 6 de chaleur pour refroidir le gaz transféré dans le réservoir 2. Par exemple, le gaz est refroidi à une température cible fixe ou variable selon les conditions de remplissage (par exemple entre -40°C et -20°C).

De préférence l'échangeur 6 de refroidissement possède ou est associé à une masse de matière (métal ou autre) formant une réserve de froid (une réserve de frigorie) pour assurer une inertie thermique suffisante.

Selon une particularité avantageuse, le circuit 8 de refroidissement comprend une ligne 9 de prélèvement de gaz reliant (de préférence via une vanne 10) un volume contenant le gaz vaporisé de la réserve 7 à l'échangeur de chaleur 6, pour transférer des frigories du fluide cryogénique vaporisé à l'échangeur 6 de chaleur. C'est-à-dire que la ligne 9 du prélèvement de gaz est distincte de la ligne de prélèvement de liquide.

La ligne 8 de prélèvement de liquide peut être raccordée à la partie inférieure de la réserve 7 tandis que les lignes de prélèvement de gaz peut être raccordée à la partie supérieure de la réserve 7.

Lors d'un remplissage d'hydrogène il peut être nécessaire d'apporter un grand nombre de frigorie dans l'échangeur 6 (via la circulation de liquide dans le circuit 8 de refroidissement).

Afin d'optimiser les performances il peut être nécessaire de maintenir en froid l'échangeur 6 notamment en dehors des phases de remplissages. Le maintien en froid pourra ainsi être réalisé via la valorisation de ce gaz vaporisé.

L'échangeur 6 pourra être maintenu par exemple entre -30°C et -50°C. Ceci permet d'optimiser la consommation d'azote et d'éviter des pertes inutiles tout diminuant la durée de mise en froid de la station 1.

Par exemple, comme représenté, l'extrémité amont de la ligne 9 de prélèvement de gaz est raccordée à la portion supérieure de la réserve 7 (qui abrite la phase gazeuse). Bien entendu, la ligne 9 de prélèvement de gaz pourrait être raccordée à un réservoir distinct qui reçoit du fluide vaporisé (gaz de vaporisation, « boil-off gas» en anglais).

La ligne 9 de prélèvement comprend de préférence une vanne 10, par exemple une vanne pilotée.

L'extrémité aval de la ligne 9 de prélèvement est par exemple raccordée au circuit 8 de refroidissement (de sorte qu'une partie de ces deux circuits peuvent être communs).

Comme illustré, le gaz vaporisé qui a été utilisé pour maintenir en froid l'échangeur 6 peut être encore valorisé dans le compresseur 5 ou ailleurs dans la station 1.

Ainsi, le circuit 8 de refroidissement peut comprendre, en aval de l'échangeur de chaleur 6, une portion reliant une sortie de l'échangeur de chaleur 6 au compresseur 5, pour transférer des frigories du fluide à ce dernier et notamment par échange thermique avec un ou des chambres de compression de l'organe 5 de compression.

De même, en aval de l'échangeur 6, il peut être prévu un transfert de frigories entre le fluide cryogénique vaporisé et l'un au moins des éléments suivants de la station 1: une armoire électrique, une centrale hydraulique, une conduite de transfert de fluide ou tout autre organe approprié. Ceci est schématisé par une double flèche entre les circuits 8 et 4 sur la figure.

Ainsi, soit l'azote liquide soit l'azote vaporisé qui a été utilisé pour céder des frigories dans l'échangeur 6 de chaleur peut encore être valorisé pour refroidir un ou des organes supplémentaires de la station 1.

Par exemple, le circuit 8 de refroidissement comprend, en aval de la sortie de l'échangeur 6 de chaleur, une double paroi assurant un échange de chaleur avec le circuit 4 de remplissage en amont et/ou en aval de l'échangeur 6. Par exemple la double paroi sépare le fluide du circuit de refroidissement et le circuit de gaz ou un élément à refroidir et la double paroi est configurée pour permettre un échange de chaleur entre ces deux entités.

Enfin, cet azote gazeux réchauffé stocké 11 peut être utilisé pour l'inertage de composants tel que la/les chambre(s) en inter-étage du/des compresseur(s) 5 ainsi que pour le pilotage de la ou des vanne(s) de régulation de la station 1.

Le surplus pourra être évacué dans un évent.

## Revendications

1. Station de remplissage de réservoirs (2) de gaz sous pression, notamment de réservoirs d'hydrogène de véhicules, comprenant un circuit (4) de remplissage ayant une extrémité amont reliée à au moins une source (3) de gaz et une extrémité aval destinée à être raccordée à au moins un réservoir (2) à remplir, le circuit (4) de remplissage comprenant un organe (5) de compression du gaz provenant de la source (3), la station de remplissage comprenant un dispositif (6, 7) de refroidissement du gaz comprimé comportant un échangeur de chaleur (6) situé dans circuit (4) de remplissage configuré pour assurer un échange thermique entre le gaz sous pression et un fluide de refroidissement, le dispositif (6, 7) de refroidissement comprenant un réserve (7) de liquide cryogénique constituant le fluide de refroidissement et un circuit (8) de refroidissement reliant la réserve (7) de liquide cryogénique à l'échangeur (6) de chaleur , via une ligne de prélèvement de liquide dans la réserve qui transfère du liquide de la réserve à l'échangeur (6) de chaleur, pour transférer des frigories du liquide cryogénique vers le gaz sous pression, **caractérisée en ce que** le circuit (8) de refroidissement comprend en outre une ligne (9) de prélèvement de gaz reliant un volume contenant le gaz vaporisé de la réserve (7) à l'échangeur de chaleur (6), pour transférer des frigories du fluide de refroidissement cryogénique vaporisé à l'échangeur (6) de chaleur.

2. Station selon la revendication 1, **caractérisée en ce que** la ligne (9) de prélèvement comprend une vanne (10), notamment une vanne pilotée.

3. Station selon la revendication 1 ou 2, **caractérisée en ce que** la ligne (9) de prélèvement possède une extrémité raccordée au circuit (8) de refroidissement.

4. Station selon l'une quelconque des revendications 1 à 3, **caractérisée en ce que** le circuit (8) de refroidissement comprend, en aval de l'échangeur de chaleur (6), une portion reliant une sortie de l'échangeur de chaleur (6) à l'organe (5) de compression, pour transférer des frigories du fluide cryogénique à l'organe (5) de compression et notamment par échange thermique du fluide de refroidissement avec une ou des chambres de compression de l'organe (5) de compression.

5. Station selon la revendication 4, **caractérisée en ce que** le circuit (8) de refroidissement comprend, en aval de la sortie de l'échangeur (6) de chaleur, une double paroi assurant un échange de chaleur avec le circuit (4) de remplissage en amont et/ou en aval de l'échangeur (6).

6. Station selon la revendication 4 ou 5, **caractérisée en ce que** le circuit (8) de refroidissement comprend, en aval de l'organe (5) de compression, une portion reliant une sortie de l'organe (5) de compression à un réservoir (11) de récupération de fluide cryogénique vaporisé.

7. Station selon l'une quelconque des revendications 1 à 6, **caractérisée en ce que** le fluide cryogénique de refroidissement comprend de l'azote.

8. Procédé de remplissage d'un gaz sous pression dans un réservoir (2), notamment de l'hydrogène dans le réservoir (2) d'un véhicule, au moyen d'une station (1) de remplissage comprenant un circuit (4) de remplissage muni d'une extrémité amont reliée à au moins une source (3) de gaz et une extrémité aval destinée à être raccordée à au moins un réservoir (2) à remplir, le circuit (4) de remplissage comprenant un organe (5) de compression du gaz provenant de la source (3), la station de remplissage comprenant un dispositif (6, 7) de refroidissement du gaz comprimé comportant un échangeur de chaleur (6) situé dans circuit (4) de remplissage configuré pour permettre un échange thermique entre le gaz sous pression et un fluide cryogénique de refroidissement liquéfié d'une réserve (7) de fluide cryogénique liquéfié via une ligne de prélèvement de liquide dans la réserve qui est amené à l'échangeur (6) de chaleur, le procédé comprenant une étape de transfert de frigories entre du fluide cryogénique vaporisé dans la réserve (7) et l'échangeur (6) de chaleur.

9. Procédé selon la revendication 8, **caractérisé en ce que** l'étape de transfert de frigories entre le fluide cryogénique vaporisé dans la réserve (7) et l'échangeur (6) de chaleur est réalisée à un moment distinct de l'échange thermique entre le gaz sous pression et le fluide cryogénique de refroidissement liquéfié.

10. Procédé selon la revendication 8 ou 9, **caractérisé en ce que** l'étape de transfert de frigories entre du fluide cryogénique vaporisé dans la réserve (7) et l'échangeur (6) de chaleur est réalisée entre deux étapes de transfert de fluide de la source (3) de gaz vers le réservoir (2) à remplir, c'est-à-dire pour maintenir en froid l'échangeur (6) de chaleur avant un remplissage ou entre deux remplissages.

11. Procédé selon la revendication 10, **caractérisé en ce que** l'échangeur de chaleur (6) est maintenu à une température comprise entre -30°C et -50°C par l'étape de transfert de frigories entre du fluide cryogénique vaporisé et l'échangeur (6) de chaleur.

12. Procédé selon l'une quelconque des revendications 8 à 11, **caractérisé en ce qu'**il comporte une étape de transfert de frigories entre du fluide cryogénique vaporisé dans la réserve (7) et l'un au moins des éléments suivants de la station (1): une armoire électrique, une centrale hydraulique, une conduite de transfert de fluide.

## Patentansprüche

1. Station zum Befüllen von Tanks (2) mit unter Druck stehendem Gas, insbesondere von Wasserstofftanks von Fahrzeugen, umfassend einen Befüllkreis (4) mit einem mit mindestens einer Gasquelle (3) verbundenen stromaufwärtigen Ende und einem stromabwärtigen Ende, das dazu bestimmt ist, an mindestens einen zu befüllenden Tank (2) angeschlossen zu werden, wobei der Befüllkreis (4) ein Verdichtungsorgan (5) zum Verdichten des von der Quelle (3) kommenden Gases umfasst, wobei die Befüllstation eine Kühlvorrichtung (6, 7) zur Kühlung des verdichteten Gases umfasst, die einen im Befüllkreis (4) angeordneten Wärmetauscher (6) aufweist, der dazu ausgestaltet ist, einen Wärmeaustausch zwischen dem unter Druck stehenden Gas und einem Kühlmedium zu gewährleisten, wobei die Kühlvorrichtung (6, 7) einen Speicherbehälter (7) mit kryogener Flüssigkeit, die das Kühlmedium bildet, umfasst und einen Kühlkreis (8), der den Speicherbehälter (7) mit kryogener Flüssigkeit mit dem Wärmetauscher (6) über eine Leitung zur Entnahme von Flüssigkeit aus dem Speicherbehälter, die Flüssigkeit vom Speicherbehälter zum Wärmetauscher (6) transferiert, verbindet, um Frigorien von der kryogenen Flüssigkeit zu dem unter Druck stehenden Gas zu transferieren, **dadurch gekennzeichnet, dass** der Kühlkreis (8) ferner eine Gasentnahmeleitung (9) umfasst, die ein Volumen, das verdampftes Gas des Speicherbehälters (7) enthält, mit dem Wärmetauscher (6) verbindet, um Frigorien vom verdampften kryogenen Kühlmedium an den Wärmetauscher (6) zu transferieren.

2. Station nach Anspruch 1, **dadurch gekennzeichnet, dass** die Entnahmeleitung (9) ein Ventil (10) umfasst, insbesondere ein angesteuertes Ventil.

3. Station nach Anspruch 1 oder 2, **dadurch gekennzeichnet, dass** die Entnahmeleitung (9) ein Ende besitzt, das an den Kühlkreis (8) angeschlossen ist.

4. Station nach einem der Ansprüche 1 bis 3, **dadurch gekennzeichnet, dass** der Kühlkreis (8) stromab des Wärmetauschers (6) einen Abschnitt umfasst, der einen Auslass des Wärmetauschers (6) mit dem Verdichtungsorgan (5) verbindet, um Frigorien vom kryogenen Medium an das Verdichtungsorgan (5) und insbesondere durch Wärmeaustausch des Kühlmediums mit einer oder mehreren Verdichtungskammern des Verdichtungsorgans (5) zu transferieren.

5. Station nach Anspruch 4, **dadurch gekennzeichnet, dass** der Kühlkreis (8) stromab des Auslasses des Wärmetauschers (6) eine Doppelwand umfasst, die einen Wärmeaustausch mit dem Befüllkreis (4) stromauf und/oder stromab des Tauschers (6) gewährleistet.

6. Station nach Anspruch 4 oder 5, **dadurch gekennzeichnet, dass** der Kühlkreis (8) stromab des Verdichtungsorgans (5) einen Abschnitt umfasst, der einen Auslass des Verdichtungsorgans (5) mit einem Tank (11) zur Rückgewinnung von verdampftem kryogenem Medium verbindet.

7. Station nach einem der Ansprüche 1 bis 6, **dadurch gekennzeichnet, dass** das kryogene Kühlmedium Stickstoff umfasst.

8. Verfahren zum Füllen eines unter Druck stehenden Gases in einen Tank (2), insbesondere von Wasserstoff in den Tank (2) eines Fahrzeugs, mittels einer Befüllstation (1), die einen Befüllkreis (4) umfasst, der mit einem mit mindestens einer Gasquelle (3) verbundenen stromaufwärtigen Ende versehen ist und mit einem stromabwärtigen Ende, das dazu bestimmt ist, an mindestens einen zu befüllenden Tank (2) angeschlossen zu werden, wobei der Befüllkreis (4) ein Verdichtungsorgan (5) zum Verdichten des von der Quelle (3) kommenden Gases umfasst, wobei die Befüllstation eine Kühlvorrichtung (6, 7) zum Kühlen des verdichteten Gases umfasst, die einen im Befüllkreis (4) angeordneten Wärmetauscher (6) aufweist, der dazu ausgestaltet ist, einen Wärmeaustausch zu ermöglichen zwischen dem unter Druck stehenden Gas und einem verflüssigten kryogenen Kühlmedium eines Speicherbehälters (7) mit verflüssigtem kryogenem Medium über eine Leitung zur Entnahme von Flüssigkeit aus dem Speicherbehälter, die dem Wärmetauscher (6) zugeführt wird, wobei das Verfahren einen Schritt des Transferierens von Frigorien zwischen dem im Speicherbehälter (7) verdampften kryogenen Medium und dem Wärmetauscher (6) umfasst.

9. Verfahren nach Anspruch 8, **dadurch gekennzeichnet, dass** der Schritt des Transferierens von Frigorien zwischen dem im Speicherbehälter (7) verdampften kryogenen Medium und dem Wärmetauscher (6) zu einem anderen Zeitpunkt als der Wärmeaustausch zwischen dem unter Druck stehenden Gas und dem verflüssigten kryogenen Kühlmedium ausgeführt wird.

10. Verfahren nach Anspruch 8 oder 9, **dadurch gekennzeichnet, dass** der Schritt des Transferierens von Frigorien zwischen dem im Speicherbehälter (7) verdampften kryogenen Medium und dem Wärmetauscher (6) zwischen zwei Schritten des Transferierens von Medium von der Gasquelle (3) zu dem zu befüllenden Tank (2) ausgeführt wird, das heißt, um den Wärmetauscher (6) vor einem Befüllen oder zwischen zwei Befüllungen kalt zu halten.

11. Verfahren nach Anspruch 10, **dadurch gekennzeichnet, dass** der Wärmetauscher (6) durch den Schritt des Transferierens von Frigorien zwischen dem verdampften kryogenen Medium und dem Wärmetauscher (6) auf einer Temperatur zwischen -30 °C und -50 °C gehalten wird.

12. Verfahren nach einem der Ansprüche 8 bis 11, **dadurch gekennzeichnet, dass** es einen Schritt des Transferierens von Frigorien zwischen dem im Speicherbehälter (7) verdampften kryogenen Medium und mindestens einem der folgenden Elemente der Station (1) umfasst: einem Schaltschrank, einer Hydraulikzentrale, einer Mediumtransferleitung.

## Claims

1. Station for filling pressurized gas tanks (2), in particular hydrogen tanks of vehicles, comprising a filling circuit (4) having an upstream end connected to at least one gas source (3) and a downstream end intended to be connected to at least one tank (2) to be filled, the filling circuit (4) comprising a unit (5) for compressing the gas from the source (3), the filling station comprising a device (6, 7) for cooling the compressed gas comprising a heat exchanger (6) located in the filling circuit (4) configured to ensure a heat exchange between the pressurized gas and a cooling fluid, the cooling device (6, 7) comprising a store (7) of cryogenic liquid constituting the cooling fluid and a cooling circuit (8) connecting the store (7) of cryogenic liquid to the heat exchanger (6), via a line for withdrawing liquid from the store which transfers liquid from the store to the heat exchanger (6), for transferring frigories from the cryogenic liquid to the pressurized gas, **characterized in that** the cooling circuit (8) also comprises a gas withdrawal line (9) connecting a volume containing the vaporized gas of the store (7) to the heat exchanger (6), for transferring frigories from the vaporized cryogenic cooling fluid to the heat exchanger (6).

2. Station according to Claim 1, **characterized in that** the withdrawal line (9) comprises a valve (10), in particular a pilot valve.

3. Station according to Claim 1 or 2, **characterized in that** the withdrawal line (9) has an end connected to the cooling circuit (8).

4. Station according to any one of Claims 1 to 3, **characterized in that** the cooling circuit (8) comprises, downstream of the heat exchanger (6), a portion connecting an outlet of the heat exchanger (6) to the compression unit (5), for transferring frigories from the cryogenic fluid to the compression unit (5) and in particular by heat exchange of the cooling fluid with one or more compression chambers of the compression unit (5).

5. Station according to Claim 4, **characterized in that** the cooling circuit (8) comprises, downstream of the outlet of the heat exchanger (6), a jacket ensuring a heat exchange with the filling circuit (4) upstream and/or downstream of the exchanger (6).

6. Station according to Claim 4 or 5, **characterized in that** the cooling circuit (8) comprises, downstream of the compression unit (5), a portion connecting an outlet of the compression unit (5) to a tank (11) for recovering vaporized cryogenic fluid.

7. Station according to any one of Claims 1 to 6, **characterized in that** the cryogenic cooling fluid comprises nitrogen.

8. Method for filling a tank (2) with a pressurized gas, in particular filling the tank (2) of a vehicle with hydrogen, by means of a filling station (1) comprising a filling circuit (4) provided with an upstream end connected to at least one gas source (3) and a downstream end intended to be connected to at least one tank (2) to be filled, the filling circuit (4) comprising a unit (5) for compressing the gas from the source (3), the filling station comprising a device (6, 7) for cooling the compressed gas comprising a heat exchanger (6) located in the filling circuit (4) configured to allow a heat exchange between the pressurized gas and a liquefied cryogenic cooling fluid of a liquefied cryogenic fluid store (7) via a line for withdrawing liquid from the store, which is fed to the heat exchanger (6), the method comprising a step of transferring frigories between vaporized cryogenic fluid in the store (7) and the heat exchanger (6).

9. Method according to Claim 8, **characterized in that** the step of transferring frigories between the vaporized cryogenic fluid in the store (7) and the heat exchanger (6) is carried out at a time distinct from the heat exchange between the pressurized gas and the liquefied cryogenic cooling fluid.

10. Method according to Claim 8 or 9, **characterized in that** the step of transferring frigories between vaporized cryogenic fluid in the store (7) and the heat exchanger (6) is carried out between two steps of transferring fluid from the gas source (3) to the tank (2) to be filled, that is to say to keep the heat exchanger (6) cold before filling or between two filling operations.

11. Method according to Claim 10, **characterized in that** the heat exchanger (6) is maintained at a temperature of between -30°C and -50°C by the step of transferring frigories between vaporized cryogenic fluid and the heat exchanger (6).

12. Method according to any one of Claims 8 to 11, **characterized in that** it comprises a step of transferring frigories between vaporized cryogenic fluid in the store (7) and at least one of the following elements of the station (1): an electrical cabinet, a hydraulic power source, a fluid transfer line.
